# FASCICULE DE BREVET EUROPEEN

(11) **EP 1 619 089 B1**
(45) Date de publication et mention de la délivrance du brevet: **11.05.2011**
(21) Numéro de dépôt: 05291440.5
(22) Date de dépôt: 04.07.2005
(51) Int. Cl.: B60R 21/34

(54) **Bloc avant pour véhicule automobile**
Frontmodul für ein Kraftfahrzeug
Front module for motor vehicle

(30) Priorité: 05.07.2004 FR 0407449
(43) Date de publication de la demande: 25.01.2006
(73) Titulaire: Faurecia Bloc Avant, 92000 Nanterre (FR)
(72) Inventeur: Laurent, Claude, 25420 Voujeaucourt (FR); Diaw, Baye, 25000 Audincourt (FR)
(74) Mandataire: Domenego, Bertrand

(56) Documents cités:
- DE-A1- 19 802 841
- DE-A1- 19 911 833
- FR-A- 2 810 940

## Description

La présente invention concerne un bloc avant pour véhicule automobile, selon le préambule de la revendication 1.

Par « le fémur et/ou le bassin », on entend dans la présente demande la partie supérieure de la jambe d'un piéton, désignée également par le terme anglais « upper leg et/ou pelvis ». Cette partie est à l'écart du genou.

On connaît de FR 2 810 940 un bloc avant du type précité, dans lequel la face avant de support d'un ventilateur comprend une région supérieure destinée à être placée en regard du fémur et/ou du bassin d'un piéton percuté frontalement par le véhicule automobile. Plus précisément, et en fonction des dimensions du véhicule, ladite région supérieure peut être au même niveau que le fémur et/ou le bassin du piéton lorsque ses jambes sont encore en appui sur le sol. Il est également possible, toujours en fonction des dimensions du véhicule, que ladite région supérieure de la face avant soit en regard d'une partie avant du capot sur laquelle le fémur et/ou la hanche d'un piéton percuté va s'appuyer, après basculement ou projection du piéton. Quoi qu'il en soit, cette région supérieure est destinée à être en regard du fémur et/ou de la hanche d'un piéton percuté frontalement par le véhicule automobile.

Dans le bloc avant de FR 2810940, la face avant est enserrée entre la surface avant d'un longeron et des plaques de fixation de la poutre de pare-chocs.

Ainsi, la face avant est fixée sur la caisse du véhicule et la région supérieure de cette face avant, disposée en regard du fémur et/ou du bassin d'un piéton, forme un point dur en cas de choc avec la hanche ou le fémur, ce qui peut entraîner des blessures sérieuses pour le piéton.

Un bloc avant selon le préambule de la revendication 1 est connu de DE 198 02 841.

Un but de l'invention est donc de fournir un bloc avant de véhicule automobile qui offre une meilleure protection du fémur et/ou du bassin d'un piéton en cas de choc frontal.

A cet effet, l'invention a pour objet un bloc avant selon la revendication 1.

Le bloc avant selon l'invention peut comprendre l'une ou plusieurs des caractéristiques suivantes qui font l'objet des revendications 2 à 4.

L'invention a également pour objet un véhicule automobile caractérisé en ce qu'il comprend une caisse et un bloc avant tel que défini ci-dessus fixé sur la caisse.

Le véhicule selon l'invention peut comprendre l'une ou plusieurs des caractéristiques qui font l'objet des revendications 6 à 11.

L'invention sera mieux comprise à la lecture de la description qui va suivre, donnée uniquement à titre d'exemple, et faite en se référant aux dessins annexés, sur lesquels :
- la Figure 1 est une vue schématique partielle et en perspective de l'extrémité avant d'un véhicule selon l'invention, en l'absence de choc avec un piéton ;
- la Figure 2 est une vue agrandie de face de la partie II de la Figure 1 ;
- la Figure 3 est une vue partielle en perspective avec un arrachement partiel suivant le plan III-III de la Figure 2 ;
- la Figure 4 est une vue de côté de l'extrémité avant de la Figure 1, prise suivant la flèche IV, après un choc frontal contre un piéton.

Dans tout ce qui suit, les orientations utilisées sont les orientations habituelles d'un véhicule automobile. En particulier, les termes « avant », « arrière », « supérieur », « inférieur », « intérieur » et « extérieur » s'entendent par rapport au sens de marche du véhicule automobile.

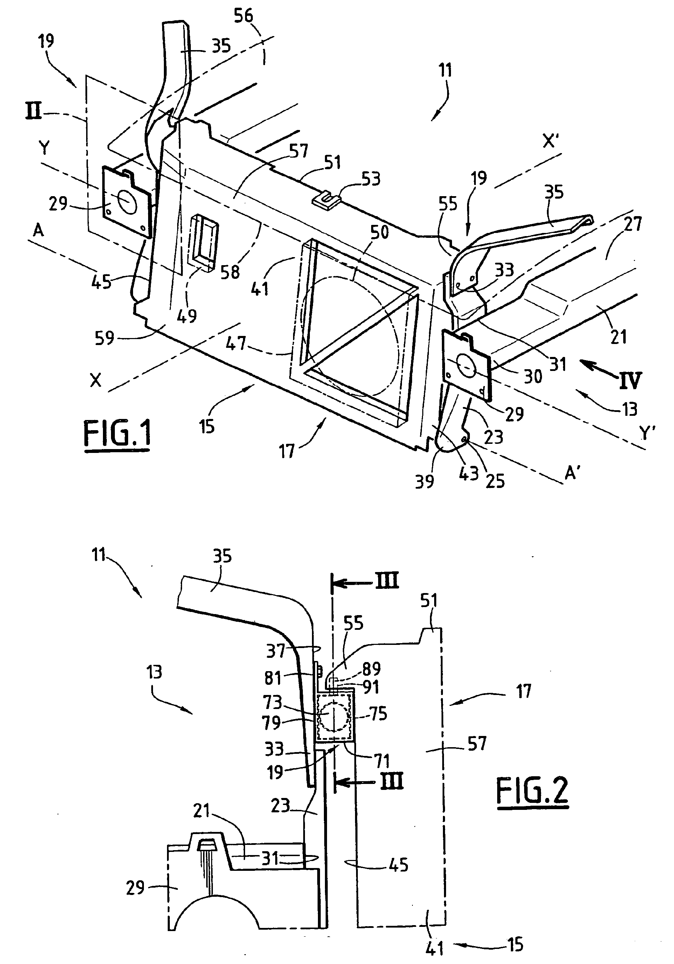

La Figure 1 illustre schématiquement l'extrémité avant 11 d'un véhicule automobile selon l'invention. Cette extrémité 11 comprend des éléments d'une caisse 13, et un bloc avant 15 qui comporte une face avant 17 et des moyens 19 de fixation de cette face 17 sur les éléments de la caisse 13.

Les éléments de la caisse 13 comprennent deux longerons 21 ou « brancards » longitudinaux, deux piliers latéraux 23, et une traverse inférieure 25.

Les longerons 21 sont fixés par leurs extrémités arrière 27 sur un tablier structurel transversal de la caisse du véhicule (non-représenté). Chaque longeron 21 comprend à son extrémité avant 30 un flasque transversal 29 destiné à recevoir une poutre de pare-chocs (non-représentée).

Les piliers 23 s'étendent sensiblement verticalement. Chaque pilier 23 est fixé par sa région médiane 31 à l'extrémité avant 30 d'un longeron 21 respectif.

Chaque pilier 23 est également fixé par son extrémité supérieure 33 à une demi-façade latérale 35 solidaire de la caisse du véhicule et qui s'étend sensiblement transversalement par rapport à un axe longitudinal X-X' du véhicule.

Comme illustré par la Figure 2, chaque demi-façade 35 présente une surface latéralement intérieure 37 de réception des moyens de fixation 19. Cette surface 37 est sensiblement parallèle à un plan vertical médian du véhicule.

En référence à la Figure 1, la traverse inférieure 25 s'étend transversalement par rapport à l'axe longitudinal X-X' entre les extrémités inférieures 39 des piliers 23.

La face avant 17 comprend un cadre 41 réalisé par surmoulage de matière plastique sur une ossature métallique. Le cadre 41 s'étend transversalement entre les piliers 23, le bord gauche 43 et le bord droit 45 du cadre 41 étant disposés respectivement en regard d'un pilier 23 respectif.

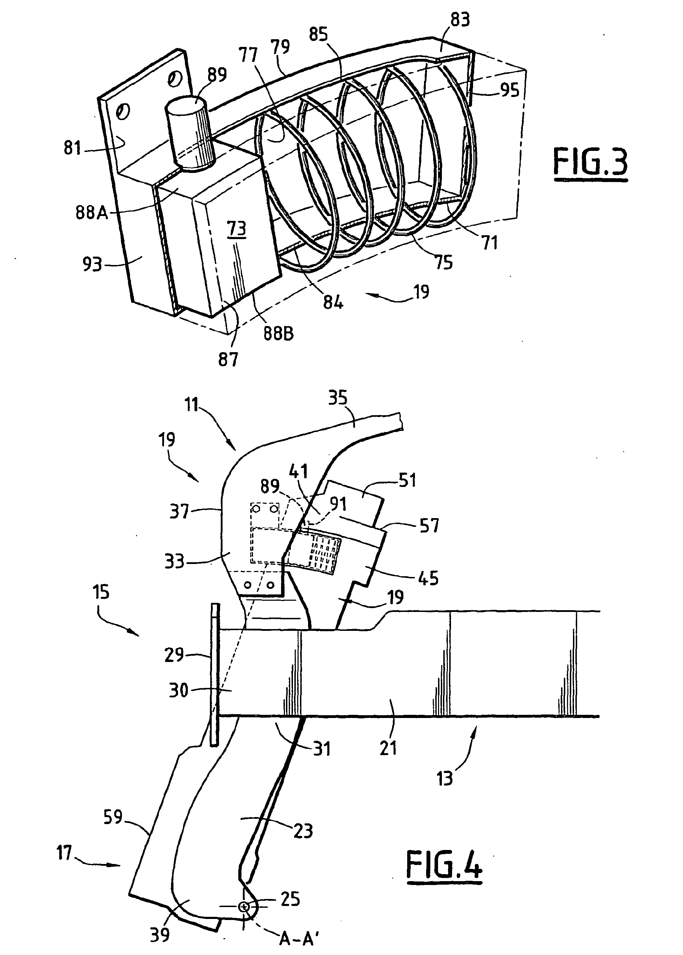

Le cadre 41 est articulé autour de la traverse inférieure 25 de sorte qu'il est déplaçable par rotation autour d'un axe sensiblement transversal A-A', entre une position avancée représentée sur la Figure 1, qu'il occupe en l'absence de choc, et une position reculée représentée sur la Figure 4, qu'il occupe en cas de choc frontal contre un piéton.

Dans sa position avancée, le cadre 41 est sensiblement vertical et dans sa position reculée, le cadre 41 est incliné par rapport à un plan vertical d'un angle compris entre 0° et 20°.

Le cadre 41 porte des équipements comme par exemple un échangeur de chaleur 47 et une pompe 49 qui font saillie vers l'avant ou vers l'arrière à partir du cadre 41. Le cadre peut porter classiquement sur d'autres équipements tels qu'un groupe moto-ventilateur 50.

Le cadre 41 comprend en outre sensiblement au milieu de son bord supérieur 51 une serrure de fixation 53 du capot 54 du véhicule.

Par ailleurs, et comme illustré par la Figure 2, le bord supérieur 51 comprend à ses extrémités gauche et droite, deux oreilles latérales 55 qui présentent une surface inférieure d'appui sur les moyens 19 de fixation.

L'axe transversal Y-Y' qui passe par les extrémités avant 30 des longerons 21 délimite dans le cadre 41 une région supérieure 57 disposée au dessus de l'axe Y-Y' et une région inférieure 59 disposée sous l'axe Y-Y'.

La région supérieure 57 est placée sensiblement au niveau du fémur et/ou du bassin d'un piéton, lorsque ce piéton se tient debout en regard de la face avant 17.

Dans l'exemple illustré par la Figure 1, cette région 57 est disposée à l'arrière du bord avant 58 du capot 56, le bord supérieur 51 s'étendant en regard du bord avant 58.

Les moyens 19 de fixation sont disposés de part et d'autre de la face avant 17, d'une part, entre le bord gauche 43 et la surface de réception 37 de la demi-façade 35 gauche, et d'autre part, entre le bord droit 45 et la surface de réception 37 de la demi-façade 35 droite.

Comme illustré par la Figure 2, les moyens de fixation 19 sont disposés en regard de la région supérieure 57 du cadre 41, de préférence au voisinage du bord supérieur 51.

Dans l'exemple illustré par la Figure 3, ces moyens de fixation 19 comprennent pour chaque bord 41, 43, une coulisse ou voie de guidage 71, un coulisseau 73 engagé dans la coulisse 71 et un ressort 75 de sollicitation du coulisseau 73.

La coulisse 71 délimite intérieurement une cavité 77 de réception du coulisseau 73 et du ressort 75. Elle présente une face latérale 79 prolongée par une plaque de fixation 81 vissée sur la surface de réception 37 de la demi-façade 35 correspondante.

Les faces supérieure 83 et inférieure 84 de la coulisse ont des sections longitudinales en arcs de cercle centrés sur l'axe A-A'.

Une fente longitudinale 85 qui débouche dans la cavité 77 est ménagée dans la face supérieure 83.

Le coulisseau 73 comprend un corps 87 de forme sensiblement cubique disposé dans la cavité 77 et une tige de fixation 89 qui fait saillie depuis le corps 87 sensiblement verticalement à l'extérieur de la cavité 77 à travers la fente 85.

Les faces supérieure et inférieure 88A et 88B du corps 87 sont de formes sensiblement complémentaires de celles des faces 83 et 84 avec interposition d'un jeu fonctionnel.

Comme représenté sur la Figure 2, la tige de fixation 89 est reçue dans un orifice vertical 91 de forme complémentaire ménagé dans l'oreille latérale 55 en regard, pour fixer longitudinalement le cadre 41 et le coulisseau 73.

Le coulisseau 73 est mobile entre une position avant au contact de la face avant 93 de la coulisse 71 et une position arrière en butée au voisinage de la face arrière 95 de la coulisse 71. Dans la position arrière, la tige 89 est en butée contre l'extrémité arrière de la fente 85 et empêche le déplacement du coulisseau 73 vers l'arrière au-delà de sa position arrière.

Lorsque le coulisseau 73 occupe sa position avant, la face avant 17 occupe sa position avancée, et lorsque le coulisseau 73 occupe sa position arrière en butée, la face avant 17 occupe sa position reculée. Ainsi, les dimensions relatives du coulisseau 73 et de la coulisse 71 définissent la course de la face avant 17 entre sa position avancée et sa position reculée.

Le ressort 75 est disposé dans la cavité 77, en appui entre la face arrière 95 de la coulisse 71 et le coulisseau 73.

Le ressort 75 sollicite, en l'absence de choc, le coulisseau 73 vers sa position avant contre la face avant 93 de la coulisse 71 avec une force initiale de rappel comprise entre 1000N et 10000N.

Les moyens 19 de fixation assurent donc une liaison longitudinale entre la face avant 17 et les éléments de caisse 13, cette liaison étant débrayable lorsqu'un effort longitudinal supérieur à la somme des forces initiales de rappel des coulisseaux 73 vers leurs positions avant est appliqué sur la face avant 17, notamment en cas de choc avec un piéton.

On décrira maintenant comme exemple le fonctionnement du bloc avant 15 selon l'invention lors d'un choc frontal contre le fémur et/ou le bassin d'un piéton. Ce choc se produit généralement après le contact initial entre la partie inférieure de la jambe du piéton et le pare-choc du véhicule qui tend à faire pivoter le piéton vers l'arrière du véhicule, au dessus de celui-ci.

Initialement, avant le choc, les ressorts 75 maintiennent les coulisseaux 73 en appui contre les faces avant 93 des coulisses 71. Ainsi la face avant 17 est maintenue dans sa position avancée.

Lors du choc, le capot du véhicule entre en contact avec le fémur et/ou le bassin du piéton et se déforme. La déformation du capot absorbe une partie de l'énergie mécanique de choc. A la fin de la déformation du capot, ou si celui-ci ne se déforme pas, le fémur et/ou le bassin du piéton prend appui par empilement mécanique contre la région supérieure 57 de la face avant 17.

L'effort appliqué sur cette région 57 par le fémur et/ou le bassin est transmis aux coulisseaux 73, et lorsque cet effort est supérieur à la somme des forces initiales de rappel de sollicitation des coulisseaux 73 vers leurs positions avant, les coulisseaux 73 se déplacent jusqu'à leurs positions arrière.

Lors de ce déplacement, la région 57 placée au niveau du fémur et/ou du bassin du piéton se déplace également de sa position avancée à sa position reculée représentée sur la Figure 4. Ce déplacement absorbe une partie de l'énergie mécanique de choc, ce qui diminue le risque de blessure du piéton.

Par ailleurs, si le véhicule subit un choc frontal contre un élément fixe, par exemple un poteau, les coulisseaux 73 dans leurs positions arrière butent contre les faces arrière 95 des coulisses 71 par l'intermédiaire des ressorts 75 et par suite, empêchent le déplacement relatif de la face avant 17 par rapport aux éléments de caisse 13 au-delà de sa position reculée. La face avant 17 reste donc solidaire des éléments de caisse 13 lors d'un choc d'intensité supérieure à celui d'un choc frontal avec un piéton.

Dans l'invention qui vient d'être décrite, en cas de choc avec le fémur et/ou le bassin d'un piéton, les moyens 19 de fixation entre la face avant 17 et les éléments de caisse 13, disposés au niveau de la région supérieure 57 de la face avant 17, permettent d'éviter que la face avant 17 ne forme un point dur susceptible de causer des blessures au piéton, notamment dans le cas où la déformation du capot n'absorbe pas ce choc ou dans le cas où le capot ne se déforme pas.

Le bloc avant 15 selon l'invention est ainsi particulièrement utile pour des véhicules dont l'encombrement ne permet de réserver un espace de déformation du capot 56.

Dans l'exemple décrit ci-dessus, la forme et les dimensions du véhicule sont telles que la région 57 est située au niveau du fémur et/ou de la hanche d'un piéton se tenant debout devant le véhicule, ce qui est typiquement le cas pour les véhicules relativement hauts tels que les 4X4.

Dans d'autres variantes, la région 57 peut être située à un niveau inférieur, notamment dans le cas de véhicules berlines. Lors d'un choc frontal avec un piéton, le piéton basculera ou sera projeté sur le capot 56, sa hanche et/ou son fémur s'appuyant alors sur une partie du capot 56 en regard de la région 57. La région 57 se comporte alors comme décrit précédemment.

Dans une variante (non représentée), à la différence du mode de réalisation représenté sur la Figure 1, la région supérieure 57 et la région inférieure 59 du cadre 41 sont constituées par deux pièces séparées. Seule la région supérieure 57 est déplaçable depuis une position avancée jusqu'à une position reculée, alors que la région inférieure 59 est fixe par rapport aux éléments de caisse 13.

Dans une autre variante (non représentée), le véhicule comprend en outre des moyens de protection destinés à être placés sensiblement au niveau du genou d'un piéton en cas de choc frontal contre le piéton. Ces moyens de protection sont par exemple ceux décrits dans la demande FR 2 818 943.

Dans une autre variante, les moyens de fixation 19 entre la face avant 17 et les éléments de la caisse 13 sont frangibles lorsqu'un effort longitudinal déterminé est appliqué sur région supérieure 57 de la face avant 17. Cet effort peut être compris entre 1000N et 10000N.

## Revendications

1. Bloc avant (15) pour véhicule automobile, du type comprenant :
- une face avant (17) de support d'équipement, la face avant (17) comprenant une région (57) destinée à être placée sensiblement en regard du fémur et/ou du bassin d'un piéton percuté frontalement par le véhicule automobile, lors d'un choc se produisant après pivotement du piéton vers l'arrière du véhicule, au-dessus de celui-ci,
- des moyens (19) de fixation de la face avant (17) sur la caisse (13) du véhicule ;
**caractérisé en ce que** le bloc avant (15) est adapté pour que ladite région (57) soit mobile par rapport à la caisse (13) lors dudit choc entre:
- une position avancée qu'elle occupe en l'absence de choc ; et
- une position reculée qu'elle occupe en cas de choc frontal contre un piéton.

2. Bloc avant (15) selon la revendication 1, **caractérisé en ce que** ladite région (57) est destinée à être placée à l'arrière du bord avant d'un capot (54) du véhicule automobile, pour que le fémur et/ou le bassin du piéton prenne appui par empilement mécanique contre ladite région (57) après déformation du capot (54), ou si le capot (54) ne se déforme pas.

3. Bloc avant (15) selon la revendication 1 ou 2, **caractérisé en ce que** les moyens (19) de fixation sont adaptés pour permettre le déplacement de ladite région (57) depuis sa position avancée jusqu'à sa position reculée.

4. Bloc avant (15) selon l'une quelconque des revendications précédentes, **caractérisé en ce que** la face avant (17) comprend un cadre de support (41) et au moins un ventilateur (50) porté par le cadre de support (41).

5. Véhicule automobile, **caractérisé en ce qu'**il comprend une caisse (13) et un bloc avant (15) selon l'une quelconque des revendications précédentes fixé sur la caisse (13) par les moyens (19) de fixation.

6. Véhicule automobile selon la revendication 5, **caractérisé en ce que** les moyens (19) de fixation forment une liaison (71, 73) entre la caisse (13) et la face avant (17), débrayable en cas de choc.

7. Véhicule selon l'une des revendications 5 ou 6, **caractérisé en ce qu'**il comprend des moyens (71, 73) de retenue de la région supérieure (57) de la face avant (17) contre un déplacement vers l'arrière au-delà de sa position reculée.

8. Véhicule selon la revendication 7, **caractérisé en ce que** les moyens de retenue (71, 73) comprennent au moins une voie de guidage (71) solidaire de la caisse (13) et un organe de coulissement (73) solidaire de la face avant (17) et engagé dans la voie de guidage (71), cet organe de coulissement (73) étant mobile dans la voie de guidage (71) entre une position avant de fin de course et une position arrière de fin de course.

9. Véhicule selon l'une des revendications 5 à 8, **caractérisé en ce que** les moyens de fixation (19) comprennent un organe (75) de rappel de la région supérieure (57) de la face avant (17) vers sa position avancée.

10. Véhicule selon l'une des revendications 5 à 9, **caractérisé en ce que** les moyens de fixation (19) sont frangibles.

11. Véhicule selon l'une des revendications 5 à 10, **caractérisé en ce que** la face avant (17) comprend deux bords latéraux (43, 45) articulés sur la caisse (13) autour d'un axe (A-A') sensiblement transversal, les moyens (19) de fixation étant disposés au voisinage du bord supérieur (51) de la face avant (17).

## Claims

1. Front end (15) for a motor vehicle, of the type comprising:
- a front face (17) for support of equipment, the front face (17) having a region (57) intended to be positioned substantially aligned with the femur and/or pelvis of a pedestrian hit head-on by the motor vehicle, in the event of an impact occurring after pivoting of the pedestrian above the vehicle towards the rear thereof,
- means (19) for fixing the front face (17) to the body (13) of the vehicle; **characterised in that** the front end (15) is so arranged that said region (57) is movable, with respect to the body (13) in the event of said impact, between:
- an advanced position, which it occupies in the absence of impact; and
- a withdrawn position, which it occupies in the case of head-on impact with a pedestrian.

2. Front end (15) according to claim 1, **characterised in that** said region (57) is arranged to be positioned behind the front edge of the bonnet (54) of the motor vehicle so that the femur and/or pelvis of the pedestrian, by mechanical piling-up, come(s) to bear against said region (57) after deformation of the bonnet (54) or if the bonnet (54) is not deformed.

3. Front end (15) according to claim 1 or 2, **characterised in that** the fixing means (19) are arranged to allow the displacement of said region (57) from its advanced position to its withdrawn position.

4. Front end (15) according to any one of the preceding claims, **characterised in that** the front face (17) includes a support frame (41) and at least one fan (50) carried by the support frame (41).

5. Motor vehicle, **characterised in that** it comprises a body (13) and, fixed to the body (13) by the fixing means (19), a front end (15) according to any one of the preceding claims.

6. Motor vehicle according to claim 5, **characterised in that** the fixing means (19) form a connection (71, 73) between the body (13) and the front face (17) which is disengagable in the case of impact.

7. Vehicle according to one of claims 5 or 6, **characterised in that** it comprises means (71, 73) for holding the upper region (57) of the front face (17) back from displacement towards the rear beyond its withdrawn position.

8. Vehicle according to claim 7, **characterised in that** the holding-back means (71, 73) comprise at least one guideway (71) fixed to the body (13) and a sliding element (73) fixed to the front face (17) and engaged in the guideway (71), that sliding element (73) being movable in the guideway (71) between a front end-of-travel position and a rear end-of-travel position.

9. Vehicle according to one of claims 5 to 8, **characterised in that** the fixing means (19) include an element (75) urging the upper region (57) of the front face (17) towards its advanced position.

10. Vehicle according to one of claims 5 to 9, **characterised in that** the fixing means (19) are frangible.

11. Vehicle according to one of claims 5 to 10, **characterised in that** the front face (17) includes two side edges (43, 45) articulated on the body (13) about a substantially transverse axis (A-A'), the fixing means (19) being arranged in the vicinity of the upper edge (51) of the front face (17).

## Patentansprüche

1. Frontmodul (15) für ein Kraftfahrzeug des Typs, der umfasst:
- eine Frontseite (17) zum Tragen von Ausrüstungsteilen, wobei die Frontseite (17) einen Bereich (57) umfasst, der vorgesehen ist, im Wesentlichen in Gegenüberstellung zum Oberschenkel und/oder des Beckens eines frontal von dem Kraftfahrzeug getroffenen Fußgängers platziert zu werden, bei einem sich erzeugenden Stoß nach einem Schwenken des Fußgängers nach hinten in Bezug auf das Fahrzeug über dasselbe,
- Mittel (19) zur Befestigung der Frontseite (17) an der Fahrzeugkarosserie (13);
**dadurch gekennzeichnet, dass** das Frontmodul (15) angepasst ist, damit der Bereich (57) in Bezug auf die Fahrzeugkarosserie (13) bei dem genannten Stoß beweglich ist zwischen:
- einer vorgeschobenen Position, die er in Abwesenheit eines Stoßes einnimmt und
- einer zurückgesetzten Position, die er im Fall eines frontalen Stoßes gegen einen Fußgänger einnimmt.

2. Frontmodul (15) nach Anspruch 1, **dadurch gekennzeichnet, dass** der Bereich (57) vorgesehen ist, hinter dem vorderen Rand einer Haube (54) des Kraftfahrzeugs angeordnet zu werden, damit der Oberschenkel und/oder das Becken des Fußgängers sich durch mechanische Schichtung gegen den Bereich (57) nach Deformation der Haube (54) oder wenn sich die Haube (54) nicht deformiert abstützen kann.

3. Frontmodul (15) nach Anspruch 1 oder 2, **dadurch gekennzeichnet, dass** die Befestigungsmittel (19) angepasst sind, um die Bewegung des Bereichs (57) von seiner vorgeschobenen Position bis zu seiner zurückgesetzten Position zu ermöglichen.

4. Frontmodul (15) nach einem beliebigen der vorhergehenden Ansprüche, **dadurch gekennzeichnet, dass** die Frontseite (17) einen Trägerrahmen (41) und mindestens einen Ventilator (50) umfasst, der von dem Trägerrahmen (41) getragen wird.

5. Kraftfahrzeug, **dadurch gekennzeichnet, dass** es eine Karosserie (13) und ein Frontmodul (15) nach einem beliebigen der vorhergehenden Ansprüche umfasst, das an der Karosserie (13) durch Befestigungsmittel (19) befestigt ist.

6. Kraftfahrzeug nach Anspruch 5, **dadurch gekennzeichnet, dass** die Befestigungsmittel (19) eine Verbindung (71, 73) zwischen dem Karosserie (13) und der Frontseite (17) bilden, die im Falle eines Stoßes auskuppelbar ist.

7. Fahrzeug nach einem der Ansprüche 5 oder 6,
**dadurch gekennzeichnet, dass** es Mittel (71, 73) zum Halten des oberen Bereichs (57) der Frontseite (17) gegen eine Bewegung nach hinten über seine zurückgesetzte Position umfasst.

8. Fahrzeug nach Anspruch 7, **dadurch gekennzeichnet, dass** die Mittel zum Halten (71, 73) mindestens einen Führungsweg (71), der mit dem Karosserie (13) verbunden ist, und ein Gleitelement (73), das mit der Frontseite (17) verbunden ist und in den Führungsweg (71) eingreift, umfassen, wobei dieses Gleitelement (73) in dem Führungsweg (71) zwischen einer vorderen Endlage und einer hinteren Endlage beweglich ist.

9. Fahrzeug nach einem der Ansprüche 5 bis 8, **dadurch gekennzeichnet, dass** die Befestigungsmittel (19) ein Element (75) zum Rückstellen des oberen Bereichs (57) der Frontseite (17) in seine vorgeschobene Position umfassen.

10. Fahrzeug nach einem der Ansprüche 5 bis 9, **dadurch gekennzeichnet, dass** die Befestigungsmittel (19) zerbrechbar sind.

11. Fahrzeug nach einem der Ansprüche 5 bis 10, **dadurch gekennzeichnet, dass** die Frontseite (17) zwei Seitenränder (43, 45) umfasst, die an der Karosserie (13) um eine Achse (A-A') angelenkt sind, die im Wesentlichen quer liegend ist, wobei die Befestigungsmittel (19) in der Nähe des oberen Randes (51) der Frontseite (17) angeordnet sind.
